# EUROPÄISCHE PATENTSCHRIFT

(11) **EP 2 235 112 B1**
(45) Veröffentlichungstag und Bekanntmachung des Hinweises auf die Patenterteilung: **12.03.2014**
(21) Anmeldenummer: 08858443.8
(22) Anmeldetag: 04.12.2008
(51) Int. Cl.: C09B 67/04, C09B 67/22, C08K 5/00, C09B 5/62, C09B 56/00

(54) **SYNTHESE VON FARBMITTELN IN MISCHAPPARATUREN**
SYNTHESIS OF DYES IN MIXING UNITS
SYNTHÈSE DE COLORANTS DANS DES APPAREILS MÉLANGEURS

(30) Priorität: 10.12.2007 EP 07122787
(43) Veröffentlichungstag der Anmeldung: 06.10.2010
(73) Patentinhaber: BASF SE, 67056 Ludwigshafen (DE)
(72) Erfinder: LÖBEL, Johannes, 68165 Mannheim (DE)
(86) Internationale Anmeldenummer: PCT/EP2008/066788
(87) Internationale Veröffentlichungsnummer: WO 2009/074504

(56) Entgegenhaltungen:
- EP-A- 1 172 417
- EP-A- 1 217 043
- WO-A-2004/076457
- WO-A-2005/078023
- WO-A-2005/085364
- CH-A- 451 943
- DE-B- 1 055 156
- DE-B- 1 067 157
- DE-B- 1 067 548
- DE-B- 1 067 951
- DE-B- 1 067 952
- DE-B- 1 067 953
- DE-B- 1 070 317
- DE-B1- 2 451 780
- DE-C- 386 057
- US-A- 4 238 386

## Beschreibung

Die vorliegende Erfindung betrifft Verfahren zur Herstellung von Farbmitteln. Weiterhin betrifft die Erfindung die Verwendung von Farbmitteln zur Einfärbung von hochmolekularen organischen und anorganischen Materialien natürlicher und synthetischer Herkunft. Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen.

Bekanntlich erhält man durch die Umsetzung von Perylen-3,4,9,10-tetracarbonsäure (Perylentetracarbonsäure) bzw. Naphthalin-1,4,5,8-tetracarbonsäure (Naphthalintetracarbonsäure) oder deren Derivaten mit Ammoniak oder primären aliphatischen oder aromatischen Aminen Küpenfarbstoffe, die pflanzliche und tierische Fasern in roten Tönen färben. Diese Stoffe sind seit ca.1913 (Perylen) bzw. 1924 (Perinon) bekannt. Die Herstellung kann in organischen Lösemitteln oder im wässrigen Medium durchgeführt werden, es kann aber auch in Abwesenheit eines Verdünnungsmittels gearbeitet werden (DE 386057, US 2,543,747, US 2,715,127).

Perinon- und Perylenpigmente dagegen werden seit ca. 50 Jahren zum Einfärben von Lacken, Kunststoffen und Druckfarben eingesetzt. Ebenfalls durch Umsetzung von Naphthalintetracarbonsäure bzw. Perylentetracarbonsäure oder deren Derivaten mit primären aliphatischen oder aromatischen Aminen in organischem Medium erhält man ein Rohpigment, das in der Regel in einem oder mehreren Zerkleinerungs- bzw. Kristallisationsschritt dem vorgesehenen Anwendungsmedium angepasst wird (DE 10 55 156, DE 10 67 157, DE 10 67 548, DE 10 67 951, DE 10 67 952, DE 10 67 953, DE 10 70 317). In der Regel wird mit einem hohen Überschuss an Lösungsmittel gearbeitet.

DE 24 51 780 beschreibt beispielsweise die Herstellung und Verwendung von Perylentetracarbonsäurediimiden als Schwarzfarbstoffe. Diese Verbindungen werden durch die Umsetzung von Perylen-3,4,9,10-tetracarbonsäuredianhydrid (Perylentetracarbonsäuredianhydrid) und n-Propylamin im wässrigem Medium bei 130 °C hergestellt. Die Farbstoffverbindungen werden bevorzugt zur Einfärbung von Lack, Kunststoff und als wässrige Präparationen (Pigmentzubereitungen) eingesetzt.

Aus der WO 2005/085364 A1 ist die Herstellung von organischen Pigmenten und deren Vorstufen in "All In One Reaktoren", Knetern und Schaufeltrocknern bekannt. Explizit wird die Herstellung von Chinacridonen-, Isoindolin-, Isonidolinon- und Chinophthalonpigmenten beschrieben.

In WO 2004/0764570 A1 wird die lösungsmittelfreie Synthese von 1,4-Diketopyrrolo-[3,4-c]pyrrol und dessen Anwendung unter anderem zur Einfärbung von Lacken, Tinten und Kunststoffen beschrieben.

CH 451 943 A betrifft ein Verfahren zur Herstellung von Perylentetracarbonsäurediimiden durch Kondensation eines Perylentetracarbonsäureanhydrids mit einem primären Amin, wobei man die Kondensation in Abwesenheit von Verdünnungsmitteln in einem Schaufeltrockner bei Temperaturen von 150 bis 300 ° durchführt. Die Kondensation wird in Gegenwart eines Wasser entziehenden Mittels wie Zinkchlorid durchgeführt.

WO 2005/085364 A1 betrifft die Herstellung von organischen Pigmenten, ausgewählt aus Chinacridon-Pigmenten, Isoindolin-Pigmenten, Isoindolinon-Pigmenten und Chinophthalon-Pigmenten und deren Vorläufern in einem sogenannten "All In One-Reaktor", einem Kneter oder einem Schaufeltrockner.

Es war eine Aufgabe der vorliegenden Erfindung, ein Verfahren zur Herstellung von Farbmitteln, insbesondere Perionon- oder Perylenfarbstoffen oder -pigmenten, zu entwickeln, das mit geringeren Mengen von Lösungsmitteln auskommt und kostengünstig durchgeführt werden kann. Eine weitere Aufgabe der Erfindung war es ein Verfahren zu finden, das es gestattet, mit möglichst geringem apparativen Aufwand Farbmittel herzustellen. Weiterhin war es Aufgabe der Erfindung ein Verfahren zur Herstellung von Farbmitteln bereitzustellen, bei dem das Verfahrensprodukt möglichst direkt weiterverarbeitbar ist.

Diese und andere Aufgaben werden, wie aus dem Offenbarungsgehalt der vorliegenden Erfindung ersichtlich, durch die verschiedenen Ausführungsformen des erfindungsgemäßen Verfahrens, die im Weiteren beschrieben sind, gelöst.

Dementsprechend wurde ein Verfahren zur Herstellung von Farbmitteln der allgemeinen Formel (la), (Ib) oder (Ic) 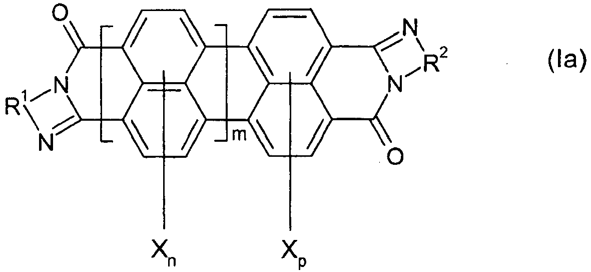 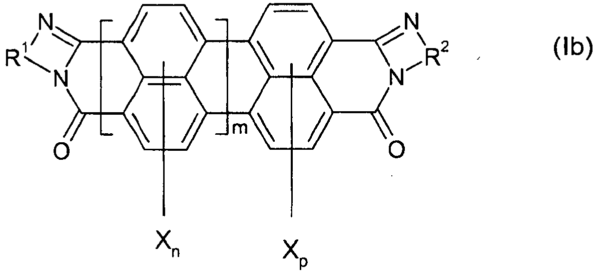 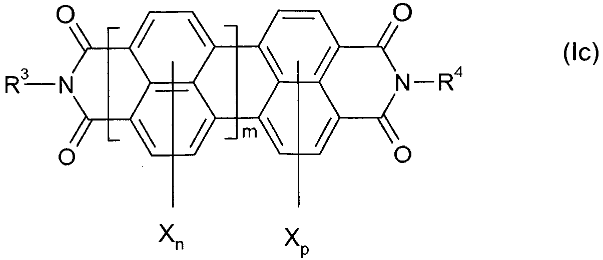 oder deren Gemischen, gefunden, mit
- R¹, R²: unabhängig voneinander, gleich oder verschieden, Phenylen, Naphthylen, Pyridylen, 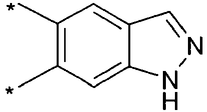 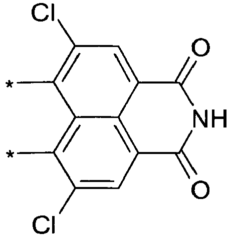 oder 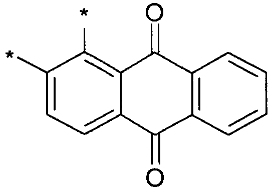 wobei R¹, R² jeweils ein- oder mehrfach durch C₁-C₂₂-Alkyl, C₃-C₂₂-Alkenyl, C₁-C₂₂-Alkoxy, Hydroxy, Nitro und/oder Halogen substituiert sein können,
- R³, R⁴: unabhängig voneinander, gleich oder verschieden, Wasserstoff, C₁-C₂₂-Alkyl, Aryl, C₁-C₂₂-Aralkyl, 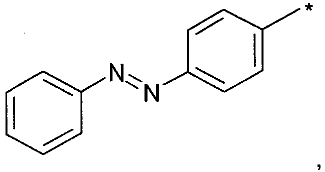 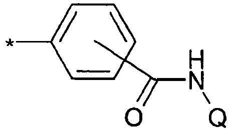 oder 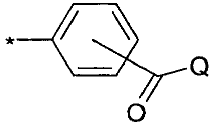 Q: C₁-C₂₀-Alkyl, Aryl wobei R³, R⁴ jeweils ein- oder mehrfach durch C₁-C₂₂-Alky, C₁-C₂₂-Alkoxy, Hydroxy, Nitro und/oder Halogen substituiert sein können,
- X: unabhängig voneinander, gleich oder verschieden, Halogen,
- n, p: unabhängig voneinander, 0, 1, 2, 3 oder 4,
- m: 0, 1, 2, 3 oder 4
wobei
(a) Tetracarbonsäuren oder deren funktionellen Derivate, mit
(b) mindestens einer Verbindung gewählt aus
   i. aliphatischen Aminen,
   ii. aromatischen Aminen,
   iii. aliphatischen Diaminen,
   iv. aromatischen Diaminen,
   v. Ammoniak
   umgesetzt werden,
(c) optional in Gegenwart weiterer Additive,
(d) in Gegenwart von Benetzungsmitteln
und wobei
die Umsetzung in einer Mischapparatur erfolgt.

Als Mischapparaturen geeignet sind Apparaturen zum Kneten oder Mahlen von festen Stoffen oder hochviskosen Suspensionen, sogenannten Knetmassen oder Mahlmassen (Mahlgut). Knet- bzw. Mahlmassen sind daher die Stoffe an denen der Knet- bzw. Mahlvorgang durchgeführt wird.

Der Begriff "Gemisch" soll dabei physikalische Mischungen wie auch feste Lösungen (Mischkristalle) der Verbindungen (la), (Ib) und/oder (Ic) umfassen.

Ausdrücke der Form Cₐ-C_{b} bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form Cₐ-C_{b}-V. V steht hierbei für eine chemische Verbindungsklasse oder Substituentenklasse, beispielsweise für Alkylverbindungen oder Alkylsubstituenten.

Halogen steht für Fluor, Chlor, Brom, oder Iod, vorzugsweise für Fluor, Chlor oder Brom, besonders bevorzugt für Chlor oder Brom.

Im einzelnen haben die für die verschiedenen Substituenten angegebenen Sammelbegriffe folgende Bedeutung:
C₁-C₂₂-Alkyl: geradkettige oder verzweigte Kohlenwasserstoffreste mit bis zu 22 Kohlenstoffatomen, bevorzugt C₁-C₁₂-Alkyl, beispielsweise C₁-C₁₀-Alkyl oder C₁₁-C₂₂-Alkyl, weiterhin bevorzugt C₁-C₁₀-Alkyl, beispielsweise C₁-C₃-Alkyl, wie Methyl, Ethyl, Propyl, Isopropyl, oder C₄-C₆-Alkyl, n-Butyl, sec-Butyl, tert.-Butyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Tri-methylpropyl, 1-Ethyl-1-methylpropyl, 1-Ethyl-2-methylpropyl, oder C₇-C₁₀-Alkyl, wie Heptyl, Octyl, 2-Ethyl-hexyl, 2,4,4-Trimethylpentyl, 1,1,3,3-Tetramethylbutyl, Nonyl oder Decyl sowie deren Isomere.
C₃-C₂₂-Alkenyl: ungesättigte, geradkettige oder verzweigte Kohlenwasserstoffreste mit 3 bis 22 Kohlenstoffatomen und einer Doppelbindung in einer beliebigen Position, beispielsweise C₃-C₁₀-Alkenyl oder C₁₁-C₂₂-Alkenyl, bevorzugt C₃-C₁₀-Alkenyl wie C₃-C₄-Alkenyl, wie 1-Propenyl, 2-Propenyl, 1-Methylethenyl, 1-Bute-nyl, 2-Butenyl, 3-Butenyl, 1-Methyl-1-propenyl, 2-Methyl-1-propenyl, 1-Methyl-2-pro-penyl, 2-Methyl-2-propenyl, oder C₅-C₆-Alkenyl, wie 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl oder 1-Ethyl-2-methyl-2-propenyl, sowie C₇-C₁₀-Alkenyl, wie die Isomere von Heptenyl, Octenyl, Nonenyl oder Decenyl.

C₁-C₂₂-Alkoxy: bedeutet eine geradkettige oder verzweigte Alkylgruppe mit 1 bis 22 Kohlenstoffatomen (wie vorstehend genannt), welche über ein Sauerstoffatom (-O-) an gebunden sind, beispielsweise C₁-C₁₀-Alkoxy oder C₁₁-C₂₂-Alkoxy, bevorzugt C₁-C₁₀-Alkyloxy, insbesondere bevorzugt C₁-C₆-Alkoxy, wie beispielweise Methoxy, Ethoxy, Propoxy, Butoxy, Pentoxy, Hexoxy.

Aryl: ein ein- bis dreikerniges aromatisches Ringsystem enthaltend 6 bis 14 Kohlenstoffringglieder, z. B. Phenyl, Naphthyl oder Anthracenyl, bevorzugt ein ein- bis zweikerniges.

C₁-C₂₂-Aralkyl: bedeutet eine geradkettige oder verzweigte Alkylgruppe mit 1 bis 22 Kohlenstoffatomen (wie vorstehend genannt), in welcher ein Wasserstoffatom durch Aryl ersetzt ist, beispielsweise C₁-C₁₀-Aralkyl oder C₁₁-C₂₂-Aralkyl, bevorzugt C₁-C₁₀-Aralkyl, insbesondere bevorzugt C₁-C₆-Aralkyl.

Heterocyclen: fünf- bis zwölfgliedrige, bevorzugt fünf- bis neungliedrige, besonders bevorzugt fünf- bis sechsgliedrige, Sauerstoff-, Stickstoff- und/oder Schwefelatome, gegebenenfalls mehrere Ringe aufweisende Ringsysteme wie Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl. Beispielsweise auch Piperidinyl oder Pyrrolidinyl.

Hetaryl: Heterocyclische Substituenten, die sich formal von Aryl-Gruppen ableiten indem eine oder mehrere Methin- (-C=) und/oder Vinylengruppe (-CH=CH-) durch Tri- oder divalente Heteroatome ersetzt werden. Bevorzugt sind als Heteroatome Sauerstoff, Stickstoff und/oder Schwefel. Besonders bevorzugt Stickstoff und/oder Sauerstoff.

C₃-C₁₂-Cycloalkyl: monocyclische, gesättigte Kohlenwasserstoffgruppen mit 3 bis zu 12 Kohlenstoffringgliedern, bevorzugt C₃-C₈-Cycloalkyl wie Cyclopropyl, Cyclobutyl, Cyclopentyl, Cyclohexyl, Cycloheptyl oder Cyclooctyl.

C₁-C₂₂-Alkylen: geradkettige oder verzweigte Kohlenwasserstoffreste mit 1 bis 22 Kohlenstoffatomen, beispielsweise C₂-C₁₀-Alkylen oder C₁₁-C₂₂-Alkylen, bevorzugt C₂-C₁₀-Alkylen, insbesondere Methylen, Dimethylen, Trimethylen, Tetramethylen, Pentamethylen oder Hexamethylen.

Heteroatome: sind bevorzugt Sauerstoff, Stickstoff, Schwefel oder Phosphor.

Unter "Perylentetracarbonsäuren" sind Perylen-3,4:9,10-tetracarbonsäuren zu verstehen.

Unter "Naphthalintetracarbonsäuren" sind Naphthalin-1,4:5,8-tetracarbonsäuren zu verstehen.

Unter "Tetracarbonsäuren" bzw. deren Anhydriden sind beispielsweise Naphthalintetracarbonsäuren oder Perylentetracarbonsäuren bzw. deren (Bis-)Anhydride und allgemein Verbindungen der allgemeinen Formel (II) bzw. (III) zu verstehen: 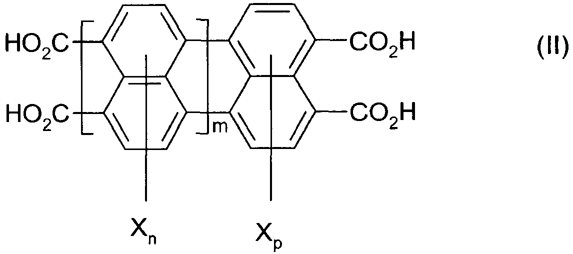 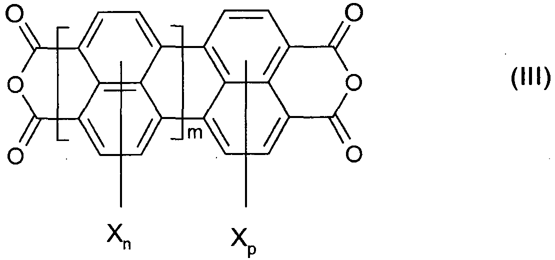 wobei die Symbole und Indizes die für die Verbindungen der allgemeinen Formel (la), (Ib) oder (Ic) angegebene Bedeutung haben.

Die im Rahmen des erfindungsgemäßen Verfahrens eingesetzten Tetracarbonsäuren oder deren funktionellen Derivate sind entweder kommerziell erhältlich oder können nach dem Fachmann bekannten Verfahren hergestellt werden (W. Herbst, K. Hunger, "Industrielle organische Pigmente", 1987, VCH Verlag, Weinheim, S. 473ff).

Unter den "funktionellen Derivaten" der Tetracarbonsäuren werden solche Verbindungen verstanden, die unter den Reaktionsbedingungen des erfindungsgemäßen Verfahrens mit Aminen bzw. Diaminen zu den Farbmitteln reagieren können. Insbesondere sind hier die Tetracarbonsäureanhydride (Bisanhydride), Tetracarbonsäurechloride oder Salze der Tetracarbonsäuren zu nennen. Bevorzugt werden Bisanhydride eingesetzt.

Tetracarbonsäuren oder deren funktionellen Derivate, insbesondere Bisanhydride, können als Ausgangsstoffe im erfindungsgemäßen Verfahren in Form von getrockneter Rohware, vorzerkleinerter Rohware oder bevorzugt als wasserfeuchter Presskuchen, der bei der Synthese anfällt (W. Herbst, K. Hunger, "Industrielle organische Pigmente", 1987, VCH Verlag, Weinheim, S. 473ff), eingesetzt werden.

Aliphatische Amine: beliebige primäre aliphatische Amine H₂N-R^{alk}, wobei R^{alk} ein H, C₁-C₂₂-Alkyl, C₃-C₂₂-Alkenyl oder C₃-C₁₂-Cycloalkyl sein kann, und wobei R^{alk} jeweils ein- oder mehrfach, bevorzugt weniger als fünfmal, ganz bevorzugt weniger als dreimal, an beliebiger Position durch Halogen, Hydroxy, Nitro und/oder Aryl substituiert sein kann und diese Substituenten ebenfalls maximal zweimal, bevorzugt maximal einmal mit den genannten Gruppen substituiert sein können. Bevorzugt entspricht R^{alk} einem H oder einem substituierten oder unsubstituierten C₁-C₂₂-Alkyl. Besonders bevorzugt ist unter einem aliphatischen Amin NH₃, Methylamin, Ethylamin, Propylamin oder Hydroxypropylamin zu verstehen. "Aliphatisches Amin" umfasst daher in diesem Zusammenhang auch Ammoniak (NH₃).

Aliphatische Diamine: beliebige aliphatische Amine, die zwei primäre Amingruppen tragen H₂N-R^{diamin}-NH₂, wobei R^{diamin} eine chemische Bindung oder C₁-C₂₂-Alkylen sein kann, und wobei R^{diamin} jeweils ein- oder mehrfach, bevorzugt weniger als fünfmal, ganz bevorzugt weniger als dreimal, an beliebiger Position durch Halogen, Hydroxy, Nitro, C₁-C₂₂-Alkyl und/oder Aryl substituiert sein kann und diese Substituenten ebenfalls maximal zweimal, bevorzugt maximal einmal mit den genannten Gruppen substituiert sein können. Bevorzugt ist R^{diamin} eine chemische Bindung, Methylen, Dimethylen oder Trimethylen. Besonders bevorzugt ist unter einem Aliphatischen Diamin substituiertes oder unsubstituiertes Hydrazin zu verstehen.

Aromatische Amine: beliebige primäre aromatische Amine H₂N-R^{arom}, wobei R^{arom} ein Aryl oder Hetaryl sein kann, und wobei R^{arom} jeweils ein- oder mehrfach, bevorzugt weniger als fünfmal, ganz bevorzugt weniger als dreimal, an beliebiger Position durch C₁-C₂₂-Alkyl, C₁-C₂₂-Alkoxy, C₃-C₂₂-Alkenyl, Halogen, Hydroxy, Nitro und/oder Aryl substituiert sein kann und diese Substituenten ebenfalls maximal zweimal, bevorzugt maximal einmal mit den genannten Gruppen substituiert sein können. Bevorzugt ist R^{arom} substituiertes oder unsubstituiertes Phenyl. Besonders bevorzugt sind unter einem aromatischen Amin alle Isomere des Xylidin, Methoxyanilin, Ethoxyanilin zu verstehen. Weiterhin sind unter aromatischen Aminen Verbindungen zu verstehen bei denen R^{arom} folgende Strukturen aufweist:

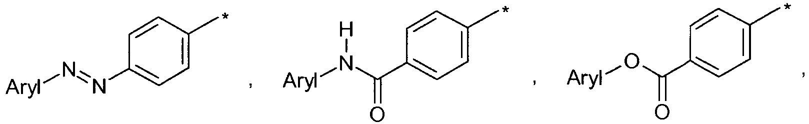

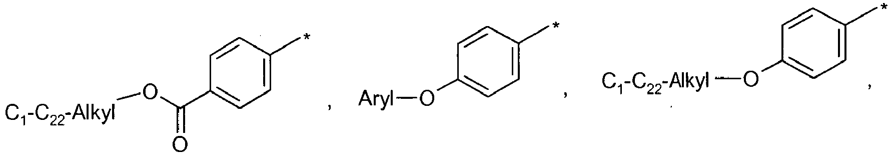

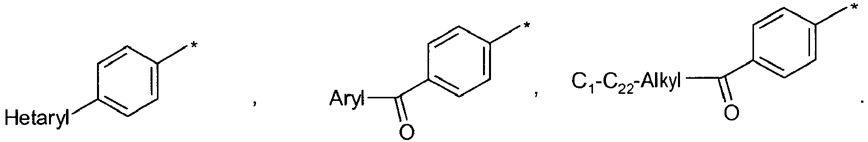

Bevorzugt sind hierbei als R^{arom}:

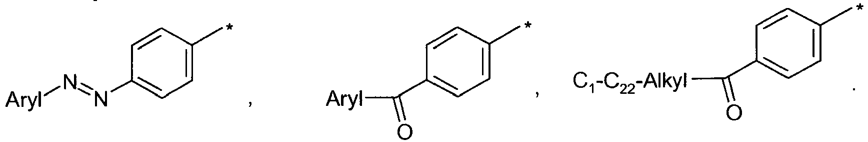

Aromatische Diamine: beliebige aromatische Amine, die zwei primäre Amingruppen tragen H₂N-R^{ardiamin}-NH₂, wobei R^{ardiamin} eine Arylen oder Hetarylen sein kann, und wobei R^{diamin} jeweils ein- oder mehrfach, bevorzugt weniger als fünfmal, ganz bevorzugt weniger als dreimal, an beliebiger Position durch C₁-C₂₂-Alkyl, C₃-C₂₂-Alkenyl, Halogen, Hydroxy, SO₃H, SO₃R' (R' = Methyl, Ethyl, Phenyl) und/oder Nitro substituiert sein kann und diese Substituenten ebenfalls maximal zweimal, bevorzugt maximal einmal mit den genannten Gruppen substituiert sein können. Bevorzugt ist R^{ardiamin} substituiertes oder unsubstituiertes Phenylen. Unter den aromatischen Diaminen sind im Rahmen der vorliegenden Erfindung besonders bevorzugt die folgenden ortho- oder peri-Diamine zu verstehen: 1,2-Diaminobenzol, 2,3-Diaminopyridin, 3,4-Diaminopyridin, 4,5-Diaminopyrimidin, 1,8-Diaminonaphthalin, 4,5-Diamino-Chinolin, 4,5-Diamino-Isochinolin, 1,8-Diamino-Isochinolin. Ganz besonders bevorzugt werden 1,2-Diaminobenzol oder 1,8-Diaminonaphthalin als aromatische Diamine eingesetzt.

Aliphatische und Aromatische Amine bzw. Diamine sind häufig kommerziell erhältlich.

Bevorzugt werden mit dem erfindungsgemäßen Verfahren Farbmittel der allgemeinen Formeln (la) und (Ib) hergestellt, wobei R¹ und R² unabhängig voneinander Phenylen oder Naphthylen sind, die jeweils ein- oder mehrfach durch C₁-C₂₂-Alkyl, C₃-C₂₂-Alkenyl, C₁-C₂₂-Alkoxy, Hydroxy und/oder Halogen substituiert sein können. Ganz bevorzugt sind die beiden R¹ und R² gleich und unsubstituiert.

Bevorzugt werden mit dem erfindungsgemäßen Verfahren ebenfalls Farbmittel der allgemeinen Formeln (Ic) hergestellt, wobei R³ und R⁴ unabhängig voneinander Wasserstoff, C₁-C₂₂-Alkyl, Aryl oder 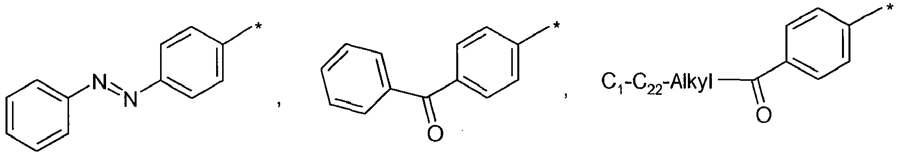 sind, wobei R³, R⁴ jeweils ein- oder mehrfach durch C₁-C₂₂-Alky, C₁-C₂₂-Alkoxy, Hydroxy und/oder Halogen substituiert sein können. Ganz besonders bevorzugt sind R³ und R⁴ unabhängig voneinander C₁-C₂₀-Alkoxyphenyl, Methyl, Propyl, 2,4-Dimethylphenyl, oder Wasserstoff. Ganz bevorzugt sind die beiden R³ und R⁴ gleich und unsubstituiert.

Die Indizes n und p in den Formeln (la), (Ib) und (Ic) sind bevorzugt unabhängig voneinander 0, 1 oder 2 und ganz bevorzugt sind n und p gleich 0.

Der Index m in den Formeln (la), (Ib) und (Ic) ist bevorzugt 0, 1 oder 2 und ganz bevorzugt ist m gleich 0 oder 1.

Bevorzugt bzw. besonders bevorzugt sind diejenigen Ausführungsformen des erfindungsgemäßen Verfahrens, bei denen die Substituenten R¹, R², R³, R⁴ und X und die Indizes n, p und m ihre bevorzugte bzw. besonders bevorzugte Bedeutung annehmen.

Falls erwünscht, können in einer Ausführungsform des erfindungsgemäßen Herstellungsverfahren auch Gemische verschiedener aliphatischer und/oder aromatischer Amine (i), (ii) und/oder Diamine (iii), (iv) als Komponente (b) eingesetzt werden. Die Zusammensetzung dieser Gemische kann je nach gewünschten Eigenschaften der Farbmittel über einen weiten Bereich variieren. Bevorzugt werden hierbei Gemische aus zwei verschiedenen Aminen und/oder Diaminen eingesetzt. Bevorzugt werden hierbei bis zu 10 Gew.-%, besonders bevorzugt bis zu 5 Gew.-%, des ersten Amins und/oder Diamins durch das zweite Amin und/oder Diamin ersetzt, um Farbmittel mit modifizierten Eigenschaften zu erhalten.

Bevorzugt werden im Rahmen des erfindungsgemäßen Verfahrens entweder nur aliphatische Amine (i) oder nur aromatische Amine (ii) als Komponente (b) eingesetzt.

Ebenfalls bevorzugt werden im Rahmen des erfindungsgemäßen Verfahrens entweder nur aliphatische Diamine (iii) oder nur aromatische Diamine (iv) als Komponente (b) eingesetzt.

Das Molverhältnis der Komponenten (b) ((i), (ii), (iii) und (iv) - Amine und Diamine insgesamt) zu den Tetracarbonsäuren oder deren funktionellen Derivaten (a), insbesonde Bisanhydriden beträgt in der Regel von 1,8 : 1 bis 4 : 1, bevorzugt von 1,9 : 1 bis 3 : 1, besonders bevorzugt 1,9 : 1 bis 2,5 :1.

Falls mit einem Überschuss an Tetracarbonsäuren oder deren funktionellen Derivaten, insbesondere Bisanhydriden gearbeitet wird, kann in einer Ausführungsform des erfindungsgemäßen Verfahrens nach erfolgter Umsetzung, ein anorganisches basisches Salz, bevorzugt Kaliumcarbonat oder Kaliumhydroxid zugegeben werden.

Falls mit einem Überschuss an Aminen oder Diaminen gearbeitet wird, kann in einer Ausführungsform des erfindungsgemäßen Verfahrens nach erfolgter Umsetzung, eine anorganische oder organische Säure, bevorzugt Essigsäure zugegeben werden und/oder bei der Aufarbeitung mit anorganischer oder organischer Säure gewaschen werden.

Die Herstellung von Farbmitteln der allgemeinen Formel (la), (Ib) oder (Ic) oder von deren Gemischen erfolgt erfindungsgemäß durch Umsetzung von Tetracarbonsäuren oder deren funktionellen Derivaten (a) mit (b), Aminen (i), (ii) bzw. Diaminen (iii), (iv) in einer Mischapparatur. Die Umsetzung erfolgt, wenigstens zeitweise, unter Betrieb der Mischapparatur. Bevorzugt wird die Mischapparatur während der gesamten Umsetzung betrieben, insbesondere wird eine Knetung oder Mahlung während der gesamten Umsetzung durchgeführt. Bevorzugt entsteht hierbei ein Rohpigment. Unter Rohpigmenten versteht man ein Farbmittel, das nach dessen Synthese aufgrund seiner physikalischen Eigenschaften (insbesondere Kristallgröße und -Form) nicht direkt in das Anwendungsmedium, beispielsweise einen Lack oder Kunststoff, eingearbeitet werden kann.

In einer Ausführungsform des erfindungsgemäßen Verfahrens werden als Komponente (c) Additive eingesetzt.

Bevorzugt werden diese Additive als Katalysatoren für die Umsetzung eingesetzt. Bevorzugte Additive sind sekundäre oder tertiäre Amine. Das sekundäre oder tertiäre Amin hat hierbei vermutlich die Rolle eines Katalysators für die Umsetzung und kann im Allgemeinen die Teilchengröße und Teilchenform der Pigmentprimärteilchen beeinflussen. Je nach Anwendung können daher abhängig vom gewählten sekundären oder tertiären Amin spezifische Farbmittelteilchen hergestellt werden.

Geeignete sekundäre oder tertiäre Amine sind aliphatische, cycloaliphatische, arylaliphatische oder heterocyclische, sekundäre oder tertiäre Amine, die häufig kommerziell erhältlich sind.

Im Allgemeinen weisen geeignete sekundäre Amine die Formel R'R"NH auf, wobei R',R" gleich oder verschieden, C₁-C₂₂-Alkyl, C₃-C₁₂-Cycloalkyl, Aryl oder Heterocyclen sein können, wobei R', R" durch Hydroxy-, C₁-C₆-Alkoxy-, C₁-C₆-Alky-, C₁-C₆-Alkylamino- oder Arylgruppen substituiert sein kann, oder R' und R" gemeinsam mit dem Stickstoffatom aus R'R"NH einen 5- oder 6-gliedrigen, heterocyclischen Ring bilden, der auch weitere Heteroatome enthalten kann. Bevorzugt sind R',R" gleich oder verschieden, C₁-C₈-Alkyl, C₃-C₈-Cycloalkyl, Aryl, die wie oben beschrieben substituiert sein können. Weiterhin bevorzugt bilden R' und R" gemeinsam mit dem Stickstoffatom einen 5- oder 6-gliedrigen, heterocyclischen Ring der noch ein weiteres Stickstoffatom enthalten kann.

Besonders bevorzugte sekundäre Amine sind Imidazol, Piperazin, N-Cyclohexylmethylamin und N-Cyclohexyl-ethylamin.

Im Allgemeinen weisen geeignete tertiäre Amine die Formel R'R"NR'" auf, wobei R',R" gleich oder verschieden, C₁-C₂₂-Alkyl, C₃-C₁₂-Cycloalkyl, Aryl oder Heterocyclen sein können, wobei R', R" durch Hydroxy-, C₁-C₆-Alkoxy-, C₁-C₆-Alky-, C₁-C₆-Alkylamino- oder Arylgruppen substituiert sein kann, oder R' und R" gemeinsam mit dem Stickstoffatom aus R'R"NR'" einen 5- oder 6-gliedrigen, heterocyclischen Ring bilden, der auch weitere Heteroatome enthalten kann. Bevorzugt sind R',R" gleich oder verschieden, C₁-C₈-Alkyl, C₃-C₈-Cycloalkyl, Aryl, die wie oben beschrieben substituiert sein können. Weiterhin bevorzugt bilden R' und R" gemeinsam mit dem Stickstoffatom einen 5- oder 6-gliedrigen, heterocyclischen Ring, der noch ein weiteres Stickstoffatom enthält. Besonders bevorzugt sind N-Methylimidazol, Pyridin und Pyrimidin.

R'" ist C₁-C₂₂-Alkyl oder Aryl, wobei R'" durch Hydroxy-, C₁-C₆-Alkoxy-, C₁-C₆-Alky-, C₁-C₆-Alkylamino- oder Arylgruppen substituiert sein kann. Bevorzugt ist R'" C₁-C₆-Alkyl oder Aryl.

Bevorzugte sekundäre oder tertiäre Amine sind Piperazin, N-(2-Hydroxyethyl)piperazin, Diethanolamin, N,N'-Dimethylpiperazin, N-Ethylpiperazin, N-Methylcyclohexylamin, Imidazol, N-Methylimidazol oder Pyrrolidin. Ganz bevorzugte sekundäre Amine sind Piperazin, N-Methylcyclohexylamin. Ein ganz bevorzugtes tertiäres Amin ist N-Methylimidazol.

Das Molverhältnis des sekundären oder tertiären Amins zu den Tetracarbonsäuren oder deren funktionellen Derivaten, insbesondere Bisanhydriden, beträgt im Allgemeinen von 0,5 : 1 bis 2 : 1, bevorzugt 0,8 : 1 bis 1,3 : 1.

Weitere geeignete optionale Additive (c) sind Lewissäuren. Bevorzugt werden als Lewissäuren AlCl₃, ZnCl₂ oder SnCl₄ eingesetzt. Das Molverhältnis der Lewissäuren zu Tetracarbonsäuren oder deren funktionellen Derivaten, insbesondere Bisanhydriden, beträgt im Allgemeinen von 0,1 : 1 bis 2 : 1, bevorzugt von 0,5 : 1 bis 1,5 : 1.

Als Additive (c) können auch Pigmentsynergisten eingesetzt werden. Bevorzugt werden als Pigmentsynergisten substituierte Perylentetracarbonsäuren oder Perylentetracarbonsäureimid-Derivate, die nicht den Verbindungen (Ia)-(Ic) entsprechen, oder Sulfonsäure-substituierte Kupferphthalocyaninderivate (z.B. ausgewählte Solsperse^{®} der Firma Luprizol) eingesetzt. Das Molverhältnis der Pigmentsynergisten zu Tetracarbonsäuren oder deren funktionellen Derivaten, insbesondere Bisanhydriden, beträgt im Allgemeinen von 0,01 : 1 bis 0,3 : 1, bevorzugt von 0,02 : 1 bis 0,1 : 1.

Weiterhin können als Additive (c) auch oberflächenaktive Substanzen eingesetzt werden. Als oberflächenaktive Substanzen sind grundsätzlich ionische- oder nichtionische (polymere) Tenside geeignet. Beispiele für oberflächenaktive Substanzen die im erfindungsgemäßen Verfahren in der Weiterverarbeitung als Additive verwendet werden können sind Polyether, die nichtionisch oder anionisch modifiziert sein können, beispielsweise Ethoxylierungsprodukte langkettiger Alkohole oder Ethoxylierungsprodukte von Alkylphenolen.

Es können somit sowohl verschiedene nichtionische als auch verschiedene ionische, insbesondere anionische, oberflächenaktive Substanzen sowie Mischungen von nichtionischen und ionischen, insbesondere anionischen, oberflächenaktiven Substanzen vorhanden sein.

Beispiele für anionische oberflächenaktive Substanzen sind dabei die sauren Phosphorsäure-, Phosphonsäure-, Schwefelsäure- und/oder Sulfonsäureester der oben erwähnten modifizierten Polyether und/oder deren Salze.

Bei den oben erwähnten nichtionischen oberflächenaktiven Substanzen auf Polyetherbasis (nichtionisch modifizierte Polyether) handelt es insbesondere um Polyalkylenoxide oder Umsetzungsprodukte von Alkylenoxiden mit Alkoholen, Aminen, aliphatischen Carbonsäuren oder aliphatischen Carbonsäureamiden. Erfindungsgemäß soll dabei unter dem Begriff Alkylenoxid auch arylsubstiutiertes Alkylenoxid, insbesondere phenylsubstituiertes Ethylenoxid, verstanden werden.

Ganz besonders geeignet sind dabei Blockcopolymere, die Polypropylenoxid- und Polyethylenoxidblöcke oder auch Poly(phenylethylenoxid)- und Polyethylenoxidblöcke aufweisen. Sie können wie die ungemischten Polyalkylenoxide durch Polyaddition dieser Alkylenoxide an Starterverbindungen, wie an gesättigte oder ungesättigte aliphatische und aromatische Alkohole, gesättigte oder ungesättigte und aliphatische und aromatische Amine, gesättigte oder ungesättigte aliphatische Carbonsäuren und Carbonsäureamide, erhalten werden. Bei Einsatz von Ethylenoxid und Propylenoxid können diese Starterverbindungen zunächst mit Ethylenoxid und dann mit Propylenoxid oder vorzugsweise zunächst mit Propylenoxid und dann mit Ethylenoxid umgesetzt werden. Weitere Einzelheiten zu diesen Blockpolymeren können der WO 2004/009688 A2 (S. 7, Z. 20 - S.9, Z. 26) entnommen werden, auf die in diesem Zusammenhang explizit Bezug genommen wird.

Werden oberflächenaktive Substanzen als Additive (c) eingesetzt, so liegt ihre Einsatzmenge im allgemeinen bei von 0,1 bis 99 Gew.-%, insbesondere bei von 2 bis 30 Gew.-%, bezogen auf die Gesamtmenge der Komponenten (a) und (b).

Ebenfalls ist die Additivierung (c) mit natürlichen und künstlichen Harzen möglich. Besonders geeignet sind Kollophoniumharze und deren Derivate. Die Einsatzmengen liegen hierbei im allgemeinen bei von 1 Gew.-% bis 50 Gew.-%, bevorzugt von 5 Gew.-% bis 30 Gew.-%, bezogen auf die Gesamtmenge der Komponenten (a) und (b).

Die Reaktionsbedingungen der Umsetzung im Rahmen des erfindungsgemäßen Verfahrens sind im Allgemeinen, abhängig beispielsweise vom verwendeten Amin bzw. Diamin, über einen weiten Bereich variabel. Bevorzugt findet die Umsetzung bei einer Temperatur von 0 bis 250 °C, besonders bevorzugt von 0 bis 220°C, ganz besonders bevorzugt von 10 bis 210°C statt. Bevorzugt findet die Umsetzung bei einem Druck von 0 bis 22 bar, besonders bevorzugt von 0 bis 20 bar statt. Die Reaktionszeit, variiert deutlich abhängig von der Natur der umgesetzten Stoffe und beträgt im Allgemeinen zwei bis 40 Stunden.

Der Anteil an Benetzungsmittel (d) beträgt höchstens 500 Gew.-%, bevorzugt 200 Gew.-% und insbesondere 100 Gew.-% bezogen auf die Gesamtmischung der Komponenten (a), (b) und optional (c). Ganz bevorzugt liegt der Anteil des Benetzungsmittels unter 90 Gew.-%, insbesondere unter 80 Gew.-%. Als Benetzungsmittel kommen beispielsweise hochsiedende organische Verbindungen zum Einsatz. Bevorzugt sind als Benetzungsmittel Glykole, Fettalkohole, aromatische Alkohole, Sulfone oder Sulfoxide zu nennen. Ganz bevorzugt sind Ethylenglykol, Diethylenglykol, Triethylenglykol, Dipropylenglykol, Ethylenglykolmonobutylether, Methylethylketon, Cyclohexanon, Diacetonalkohol, Dimethylformamid, Dimethylacetamid, N-Methylpyrrolidon, Butylacetat, Glycerintriacetat, Sulfolan und Dimethylsulfoxid. Selbstverständlich ist auch der Einsatz eines Gemisches von Benetzungsmitteln möglich.

Zweckmäßigerweise wird soviel Benetzungsmittel (d) eingesetzt, dass eine knetfähige oder mahlfähige Masse entsteht.

Die Umsetzung im erfindungsgemäßen Verfahren wird in Apparaturen (Mischapparaturen) durchgeführt, die eine Mischung der Komponenten (a), (b) ((i), (ii), (iii), und/oder (iv)) und optional (c) und/oder optional (d) bewirken, insbesondere werden diese Komponenten bevorzugt miteinander verknetet oder vermahlen.

Insbesondere bevorzugte Mischapparaturen sind kneterartige Reaktoren, ein- oder mehrteilige Kneter, ein- oder mehrwellige Kneter, Extruder, Schaufeltrockner, Mischer oder Mühlen. Ganz besonders bevorzugt sind ein- oder mehrwellige Kneter.

Bevorzugt wird das erfindungsgemäße Verfahren ebenfalls in einem Schmelzemischaggregat als Mischapparatur durchgeführt. Solche Schmelzemischaggregate sind z.B. Schneckenkneter, etwa einwellige Kneter (z.B. Ko-Kneter, Einschneckenextruder insbesondere mit Misch- und Scherteilen), zweiwellige Kneter (z.B. Zweischneckenextruder Typ ZSK oder ZE, Kombiplast-Extruder, Doppelschnecken-Knetmischer MPC, zweistufige Mischer FCM, Knetschneckenextruder KEX, Schwerwalzenextruder). Ebenso sind Kneter mit oder ohne Stempel geeignet, Trogkneter und Banbury-Mischer. Einzelheiten findet der Fachmann z.B. in Saechtling (Hg.), Kunststoff-Taschenbuch, 27. Ausgabe, Carl Hanser Verlag München 1998, S. 202-211.

In einer bevorzugten Ausführungsform des erfindungsgemäßen Verfahrens wird in einem zusätzlichen Verfahrensschritt, nach im Wesentlichen abgeschlossener Umsetzung der Komponenten (a) und (b) in Gegenwart von optional (c) und/oder (d), das Umsetzungsprodukt, beispielsweise das Rohpigment in derselben Apparatur zu einer Handelsware weiterverarbeitet. Eine bevorzugte Methode der Weiterverarbeitung ist die so genannte Salzknetung oder Salzmahlung, wie beispielsweise in WO 2006/114403 A2 (S. 7, Z. 14 - S. 8, Z.23) beschrieben. In der Regel werden kristalline anorganische Salze als Knet- oder Mahlsalze eingesetzt. Es können die für Salzknetungen und Salzmahlungen üblichen Salze oder Salzmischungen verwendet werden. Als anorganische Salze eignen sich dabei wasserlöslichen Salze, insbesondere z.B. Natriumchlorid und Natriumsulfat. Üblicherweise werden technische Salze mit oder ohne vorherige Mikronisierung verwendet. Bevorzugt haben die Salze eine mittlere Teilchengröße von 5 bis 200 µm, besonders bevorzugt von 10 bis 50 µm. Außerdem haben sie zweckmäßigerweise nur eine Löslichkeit von ≤ 100 mg/l, insbesondere ≤ 10 mg/l (jeweils bei 20°C), in dem optionalen Benetzungsmittel (d), bevorzugt sind sie darin praktisch unlöslich. Das Gewichtsverhältnis von Salz zu Umsetzungsprodukt kann bis zu 12 : 1 betragen und liegt vorzugsweise bei 3 : 1 bis 9 : 1.

Das Benetzungsmittel (d) wird dem Umsetzungsprodukt nach im Wesentlichen abgeschlossener Umsetzung, aber vor oder während der Weiterverarbeitung, insbesondere durch Salzknetung oder Salzmahlung zugegeben. Besonders bevorzugt ist die Zugabe des Benetzungsmittels vor der Weiterverarbeitung. Üblicherweise werden auf 100 g Salz etwa 10 bis 45 ml Benetzungsmittel benötigt.

In der Regel enthält die Knet- oder Mahlmasse für die Salzknetung oder -mahlung je g Umsetzungsprodukt, beispielsweise je g Rohpigment, 0,5 bis 2 g, vorzugsweise 0,6 bis 1 g, Benetzungsmittel (d) und 1 bis 10 g, insbesondere 3 bis 8 g, anorganisches Salz.

Das vor oder während der Salzknetung oder -mahlung eingesetzte Benetzungsmittel (d) weist bevorzugt in Wasser eine Löslichkeit von mindestens 10 g/100 ml auf und ist vorzugsweise neutral, wobei saure oder basische Verunreinigungen nicht stören.

Das anorganische Salz und das Benetzungsmittel (d) können nach der Knetung mit Wasser ausgewaschen werden.

Die Knet- oder Mahldauer liegt üblicherweise bei 0,5 bis 24 h, vor allem 1 bis 16 h.

Die erfindungsgemäße Salzknetung kann unter Kühlen oder Heizen bei Temperaturen von unter 0°C bis 220°C vorgenommen werden. Bevorzugte Knettemperaturen liegen bei 80 bis 200°C. Als Knetaggregat eignen sich insbesondere, wie oben bereits erwähnt, einwellige und doppelwellige Kneter und Koller. Die Umdrehungsgeschwindigkeit wird zweckmäßigerweise so gewählt, dass die Knetmasse homogen und unter gleichmäßiger Scherung bewegt wird. Die Aufarbeitung des erhaltenen Knetguts kann durch Einrühren in Wasser, Abfiltrieren, Waschen mit Wasser und Trocknen erfolgen. Zweckmäßigerweise kann das getrocknete Produkt einer Desagglomerierungsmahlung z.B. in Stift-, Rotor- oder Strahlmühlen unterzogen werden. Alternativ kann der wässrige Filterkuchen auch gefrier- oder sprühgetrocknet werden.

Die Salzmahlung kann in kontinuierlich oder diskontinuierlich arbeitenden Kugelmühlen, Schwingmühlen oder Attritoren unter Verwendung der üblichen Mahlkugeln und/oder gegebenenfalls Schlagstangen durchgeführt werden.

Die erfindungsgemäße Salzmahlung wird vorzugsweise in Abwesenheit eines organischen Lösungsmittels vorgenommen. In Einzelfällen kann es jedoch vorteilhaft sein, ein organisches Lösungsmittel in Mengen von etwa 0,1 bis 10 Gew.-%, bezogen auf das Umsetzungsprodukt zuzusetzen. Als geeignete Lösungsmittel seien beispielhaft genannt Xylol oder Phthalsäuredialkylester, z.B. Phthalsäuredimethylester.

Die Mahltemperaturen liegen im allgemeinen bei Raumtemperatur bis 130°C, vorzugsweise bei 40 bis 110°C.

Die Mahldauern sind jeweils auf das verwendete Mahlaggregat abzustimmen.

Die erfindungsgemäße Mahlung kann an Luft erfolgen, wird jedoch bevorzugt unter Inertgas vorgenommen.

Das erhaltene Mahlgut kann wie bei der Salzknetung beschrieben aufgearbeitet werden.

In einer Ausführungsform besteht das erfindungsgemäße Verfahren zur Herstellung von Farbmitteln der allgemeinen Formeln (la), (Ib) oder (Ic) aus mehreren Verfahrensschritten die zeitlich nacheinander oder auch gleichzeitig ablaufen können. Beispielsweise umfasst das erfindungsgemäße Verfahren die folgenden Verfahrensschritte (I)-(IX):
(I) Zugabe Komponente (a),
(II) Zugabe Komponente (b) ((i), (ii), (iii) und/oder (iv)),
(III) optional, Zugabe Komponente (c),
(IV) optional, Zugabe Komponente (d),
(V) thermische Umsetzung in einer Mischapparatur,
(VI) Abkühlen,
(VII) optional Zugabe von anorganischem basischen Salz oder (an)organischer Säure
(VIII) optional, Weiterbearbeitung, insbesondere durch Salzknetung
(IX) optional, Aufarbeitung, beispielsweise durch Zugabe von Wasser, Filtration, Trocknung

Es versteht sich, dass die Zugabe der einzelnen Komponenten in Schritt (I)-(IV) sowohl kontinuierlich, als auch batchweise erfolgen kann. Weiterhin kann bei der thermischen Umsetzung (V) die Erhöhung der Temperatur sowohl kontinuierlich als auch stufenweise bis zum gewünschten Endwert der Temperatur erfolgen. Gleiches gilt für das Abkühlen (VI). Verfahrensschritte (VII) und (VIII) können auch vertauscht werden. Die Zugabe der Additive (c) in Schritt (III) kann auch nach der Umsetzung (V) oder vor oder während der Weiterbearbeitung (VIII) erfolgen. Wie bereits oben beschrieben kann die Zugabe des Benetzungsmittels (d) in Schritt (IV) auch nach der Umsetzung (V) oder vor oder während der Weiterbearbeitung (VII) erfolgen.

Ein weiterer Gegenstand der vorliegenden Erfindung ist die Verwendung der erfindungsgemäß hergestellten Farbmittel zur Einfärbung von hochmolekularen organischen und anorganischen Materialien natürlicher und synthetischer Herkunft.

Bevorzugt ist die Verwendung zur Einfärbung von Kunststoffen, Lacken oder Druckfarben.

Die Einarbeitung der nach dem erfindungsgemäßen Verfahren hergestellten Farbmittel in Kunststoffe kann nach allen bekannten Methoden erfolgen, z.B. durch gemeinsames Extrudieren, Walzen, Kneten, Pressen oder Mahlen, wobei die Kunststoffe, enthaltend die Perylenpigmente, zu Kunststoffformkörpern, Endlosprofilen, Platten, Folien, Fasern, Filmen und Beschichtungen verarbeitet werden können.

Weitere Verarbeitungsmöglichkeiten, auch für den Einsatz in hochmolekularen anorganischen Materialien, sind in der WO 2005/078023, S. 15, Z. 22- S. 18, Z. 6 angegeben, auf die in diesem Zusammenhang explizit Bezug genommen wird.

Die erfindungsgemäßen Farbmittel eignen sich hervorragend zur Einfärbung von hochmolekularen organischen und anorganischen Materialien natürlicher und synthetischer Herkunft.

Weitere Anwendungsmöglichkeiten sind in der WO 2005/078023, S. 15, Z. 22- S. 18, Z. 6 angegeben, auf die in diesem Zusammenhang vollinhaltlich Bezug genommen wird. Damit wird diese Literaturstelle zum Offenbarungsgehalt der vorliegenden Erfindung gemacht. Weiterhin ist eine Verwendung der erfindungsgemäß hergestellten Farbmittel als Aktivkomponenten in der Photovoltaik möglich.

Als Beispiele für hochmolekulare synthetische organische Materialien seien genannt:
Polyolefine, wie Polyethylen, Polypropylen, Polybutylen, Polyisobutylen und Poly-4-methyl-1-penten, Polyolefincopolymere, wie Luflexen^{®} (Basell), Nordel^{®} (Dow) und Engage^{®} (DuPont), Cycloolefincopolymere, wie Topas^{®} (Celanese), Polytetrafluoroethylen (PTFE), Ethylen/Tetrafluoroethylen-Copolymere (ETFE), Polyvinylidendifluorid (PVDF), Polyvinylchlorid (PVC), Polyvinylidenchlorid, Polyvinylalkohole, Polyvinylester, wie Polyvinylacetat, Vinylestercopolymere, wie EthylenNinylacetat-Copolymere (EVA), Polyvinylalkanale, wie Polyvinylacetal und Polyvinylbutyral, (PVB), Polyvinylketale, Polyamide, wie Nylon^{®} [6], Nylon [12] und Nylon [6,6] (DuPont), Polyimide, Polycarbonat, Polycarbonat-Copolymere und physikalische Blends von Polycarbonaten mit Acryl-Butadien-Styrol-Copolymeren, Acrylnitril-Styrol-Acrylester-Copolymeren, Polymethylmethacrylaten, Polybutylacrylaten, Polybutylmethacrylaten, Polybutylenterephthalaten und Polyethylenterephthalaten, Polyester wie Polyethylenterephthalat (PET), Polybutylenterephthalat (PBT) und Polyethylennaphthalat (PEN), Copolymerisate, Umesterungsprodukte und physikalische Gemische (Blends) der zuvor genannten Polyalkylenterephthalate, Poly(meth)acrylate, Polyacrylamide, Polyacrylnitril, Poly(meth)acrylat/ Polyvinylidendifluorid-Blends, Polyurethane, Polystyrol, Styrolcoplymere, wie Styrol/ Butadien-Copolymere, Styrol/-Acryinitril-Copolymere (SAN), Styrol/Ethylmethacrylat-Copolymere, Styrol/Butadien/Ethylacrylat-Copolymere, Styrol/Acrylnitril/Methacrylat-Copolymere, Acrylnitril/Butadien/Styrol-Copolymere (ABS) und Methacrylat/Butadien/-Styrol-Copolymere (MBS), Polyether wie Polyphenylenoxid, Polyetherketone, Polysulfone, Polyethersulfone, Polyglykole wie Polyoxymethylen (POM), Polyaryle wie Polyhenylen, Polyarylenvinylene, Silicone, Ionomere, thermoplastische und duroplastische Polyurethane sowie deren Mischungen.

Als Beispiele für hochmolekulare synthetische anorganische Materialien seien aufgeführt:
niedrigschmelzende Borosilikat-Glasfritts, gegebenenfalls organisch modifizierte Silikatsole und -gele, über einen Sol-Gel-Prozeß hergestellte, gegebenenfalls dotierte Silikat-, Aluminat-, Zirkonat- und Alumosilikatbeschichtungen und Schichtsilikate.
Ebenfalls vorteilhaft ist ein Einsatz zuvor separat hergestellter Farbmittelpräparationen auf Basis eines Polymeren oder eines Polymer-Blends, eines oder mehrerer Polyolefinwachse oder von Mischungen hieraus zur Erzielung homogener, farbstarker Einfärbungen bei niedrigschmelzenden Polymeren (z.B. den meisten gängigen Polyolefinen) oder solchen mit niedriger Schmelzviskosität (z.B. weichgemachtem PVC und PVB sowie blasformbarem PET). Während das bei den polymerbasierenden Farbmittelpräparationen ("Masterbatch", "Compound") eingesetzte Trägerpolymer(blend) im allgemeinen identisch mit dem einzufärbenden hochmolekularen synthetischen organischen Material ist, finden zur Herstellung polyolefinwachsbasierender Pigmentpräparationen als Trägermaterial insbesondere homo- und copolymere PE- und PP-Wachse wie Luwax A (Ethylen-Homopolymerisat; BASF), Luwax EVA (Ethylen-Vinylacetat-Copolymerisat; BASF) oder Licowax^{®} PP 230 (Propylen-Homopolymerisat; Clariant) Verwendung.

Das erfindungsgemäße Verfahren gestattet die effiziente Herstellung von Farbmitteln. Im Rahmen des erfindungsgemäßen Verfahrens kann auf den Einsatz von großen Mengen an Lösungsmittel verzichtet werden. Durch Kombination von Umsetzung und Weiterverarbeitungsschritt in einem Gesamtverfahren kann direkt ein Handelsprodukt hergestellt werden. Dabei kann im Vergleich zu einer Lösungsmittel-Synthese mit wesentlich höheren Konzentrationen gearbeitet werden. Die Umsetzung bei relativ geringen Temperaturen ermöglicht ein energie- und materialschonendes Herstellverfahren. Insbesondere die Umsetzung von Bisanhydriden mit unterschiedlichen Aminen bzw. Diaminen ist unter milden Reaktionsbedingungen möglich.

Die vorstehenden Ausführungsformen des erfindungsgemäßen Verfahrens und die nachfolgenden Beispiele verdeutlichen beispielhaft die vorliegende Erfindung. Es sind jedoch viele weitere Variationen des Verfahrens und Kombinationen der Merkmale des erfindungsgemäßen Verfahrens für den Fachmann denkbar, ohne den Rahmen der Patentansprüche zu verlassen.

### Beispiele:

### Beispiel 1

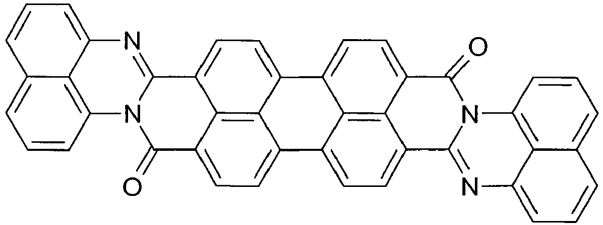

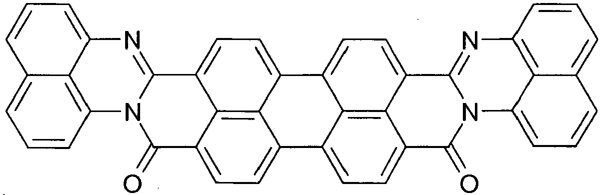

In einem Duplexkneter der Firma Ika wurden 78 g Perylenbisanhydrid (198 mmol), 16 g Piperazin (186 mmol), 61 g 1,8-Diaminonaphthalin (386 mmol) und 55 g Tetraglykol vorgelegt, unter Kneten innerhalb von einer Stunde auf 200 °C erhitzt und 4 Stunden bei dieser Temperatur zur Reaktion gebracht.

Nach dem Abkühlen auf Raumtemperatur wurde die Knetmasse in 2%-ige Pottasche-Lösung eingetragen und bei 70 °C zwei Stunden gerührt.

Die Suspension wurde abfiltriert, nacheinander mit Wasser, 10%-iger Essigsäure und Wasser gewaschen. Nach dem Trocknen bei 80 °C erhielt man 121 g schwarzes Perylenpigment, entsprechend 98% der Theorie in Form eines schwarzen Pulvers.

### Beispiel 2

In einem Duplexkneter der Firma Ika wurden 34 g Perylenbisanhydrid (87 mmol), 7 g Piperazin (81 mmol), 27 g 1,8-Diaminonaphthalin (173 mmol) und 35 g Tetraglykol vorgelegt, unter Kneten innerhalb von vier Stunden auf 180 °C erhitzt und 8 Stunden bei dieser Temperatur zur Reaktion gebracht.

Nach dem Abkühlen auf Raumtemperatur wurden 158 g Natriumsulfat und weitere 25 g Tetraglykol zugegeben, unter Kneten auf 180 °C erhitzt und acht Stunden weiterverarbeitet. Nach dem Abkühlen auf 60 °C wurde die Reaktionsmasse in 1000 ml Wasser eingetragen, 3 g Pottasche zugegeben und bei 70 °C eine Stunde gerührt.

Die Suspension wurde abfiltriert, nacheinander mit Wasser, 10%-iger Essigsäure und Wasser gewaschen. Nach dem Trocknen bei 110 °C erhielt man 54 g schwarzes Perylenpigment, entsprechend 97% der Theorie in Form eines schwarzen Pulvers.

### Beispiel 3

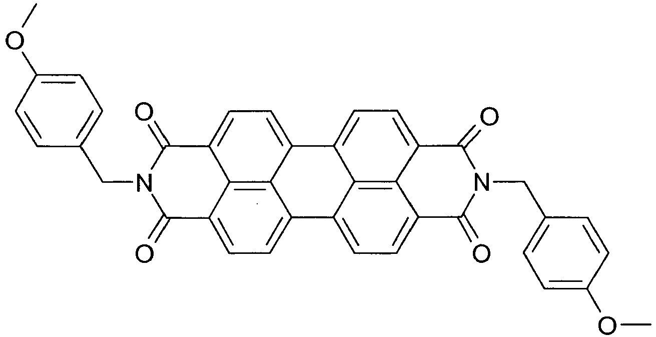

In einem Duplexkneter der Firma Ika wurden 80 g Perylenbisanhydrid (205 mmol), 64 g 4-Methoxybenzylamin (466 mmol) und 50 g Triglykol vorgelegt, unter Kneten innerhalb von 90 min auf 135 °C erhitzt und 5 Stunden bei dieser Temperatur zur Reaktion gebracht.

Nach dem Abkühlen auf Raumtemperatur wurden 158 g Natriumsulfat und weitere 25 g Tetraglykol zugegeben, unter Kneten auf 180 °C erhitzt und acht Stunden weiterverarbeitet. Nach dem Abkühlen auf 60 °C wurde die Reaktionsmasse in 1000 ml Wasser eingetragen, 3 g Pottasche zugegeben und bei 70 °C eine Stunde gerührt.

Die Suspension wurde abfiltriert, nacheinander mit Wasser, 10%-iger Essigsäure und Wasser gewaschen. Nach dem Trocknen bei 110 °C erhielt man 54 g schwarzes Perylenpigment, entsprechend 97% der Theorie in Form eines schwarzen Pulvers.

MS (MALDI): m/z (%): 630 (100) [M]-, 510 (5) [M(Halbimid)]-.

### Beispiel 4

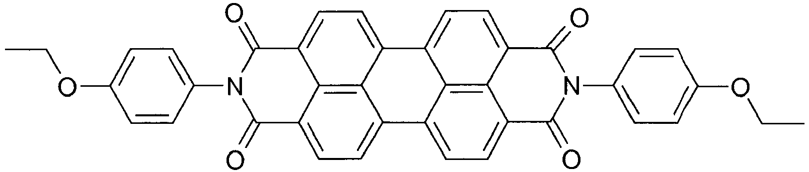

In einem Duplexkneter der Firma Ika wurden 85 g Perylenbisanhydrid (217 mmol), 60 g 4-Ethoxyanilin (438 mmol) und 40 g Triglykol vorgelegt, unter Kneten innerhalb von sechs Stunden auf 180 °C erhitzt und acht Stunden bei dieser Temperatur zur Reaktion gebracht.

Nach dem Abkühlen auf Raumtemperatur wurde die Reaktionsmasse in 1,5 Liter Wasser suspendiert auf 70 °C erhitzt und eine Stunde gerührt. Nach der Zugabe von 2 g Pottasche wurde eine weitere Stunde bei 80 °C gerührt. Die Suspension wurde abfiltriert, nacheinander mit Wasser, 10%-iger Essigsäure und Wasser gewaschen.

Nach dem Trocknen bei 110 °C erhielt man 87 g schwarzes Perylenpigment, entsprechend 67% der Theorie in Form eines rotbraunen Pulvers.

MS (MALDI): m/z (%): 631 (100) [M+H]+, 653 (2) [M+Na]+.

### Beispiel 5

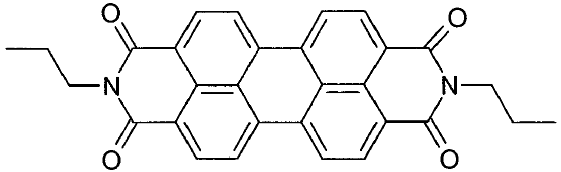

In einem Duplexkneter der Firma Ika wurden 85 g Perylenbisanhydrid (217 mmol), 29 g Propylamin (491 mmol) und 36 g Triglykol vorgelegt, unter Kneten fünf Stunden bei 25 °C zur Reaktion gebracht.

Die Knetmasse wird in eine Vorlage aus 1400 ml Wasser eingetragen, mit Schwefelsäure pH 6 eingestellt und über eine Nutsche filtriert. Nach dem Trocknen erhält man 88 g (86%) des Farbmittels in Form eines braunschwarzen Pulvers.

### Beispiel 6

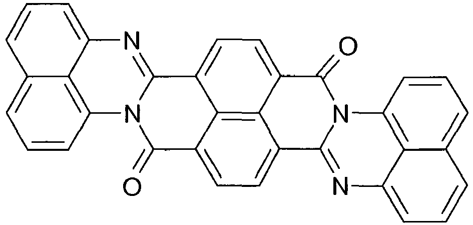

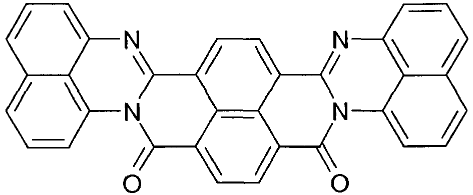

In einem Duplexkneter der Firma Ika wurden 76 g 1,4,5,8-Naphthylentetracarbonsäuredianhydrid, 93 g 1,8-Diaminonaphthalin und 33 g Triglykol unter Kneten sechs Stunden bei 160 °C zur Reaktion gebracht. Nach dem Suspendieren in einen Liter Wasser wurde eine Stunde bei 80 °C gerührt, das Produkt durch Filtration isoliert und bei 120 °C getrocknet. Man erhielt 119 g des Perinon-Pigments (79% d. Th.) in Form eines schwarzen Pulvers.

MS (MALDI): m/z (%): 512 (100) [M]+, 535 (5) [M+Na]+.

### Beispiel 7

In einer Schwingmühle mit 60 Stahlkugeln (2,5 cm Durchmesser) werden 78 g Perylenbisanhydrid (198 mmol), 16 g Piperazin (186 mmol), 61 g 1,8-Diaminonaphthalin (386 mmol) und 55 g Tetraglykol vorgelegt, unter Mahlen innerhalb von einer Stunde auf 180 °C erhitzt und 8 Stunden bei dieser Temperatur zur Reaktion gebracht.

Nach dem Abkühlen auf Raumtemperatur wird die gemahlene Masse in 2%-ige Pottasche-Lösung eingetragen und bei 70 °C zwei Stunden gerührt.

Die Suspension wird abfiltriert, nacheinander mit Wasser, 10%-iger Essigsäure und Wasser gewaschen. Nach dem Trocknen bei 80 °C erhält man ein Perylenpigment in Form eines schwarzen Pulvers.

### Beispiel 8

In einem Duplexkneter der Firma Ika werden 78 g Perylenbisanhydrid (198 mmol), 16 g Piperazin (186 mmol), Verbindung A, Verbindung B und 55 g Tetraglykol vorgelegt, unter Kneten innerhalb von einer Stunde auf 200 °C erhitzt und 4 Stunden bei dieser Temperatur zur Reaktion gebracht.

Nach dem Abkühlen auf Raumtemperatur wird die Knetmasse in 2%-ige Pottasche-Lösung eingetragen und bei 70 °C zwei Stunden geknetet.

Die Suspension wird abfiltriert, nacheinander mit Wasser, 10%-iger Essigsäure und Wasser gewaschen. Nach dem Trocknen bei 80 °C erhält man schwarzes Perylenpigment in Form eines schwarzen Pulvers.

| Versuch | Verbindung A | Verbindung B |
|---|---|---|
| 1. | 4,1 g 1,2-Diaminobenzol (38 mmol) | 55 g 1,8-Diaminonaphthalin (348 mmol) |
| 2. | 50 g p-Ethoxy-Anilin (367 mmol) | 0,6 g Methylamin (19 mmol) |
| 3. | 22 g Propylamin (367 mmol) | 0, 6 g Methylamin (19 mmol) |
| 4. | 46 Xylidin (378 mmol) | 0,9 g 1,2-Diaminobenzol (8 mmol) |

### Versuch 9

In einem Duplexkneter der Firma Ika werden 39 g Perylenbisanhydrid, 36 g 1,4,5,8-Naphthylentetracarbonsäuredianhydrid, 16 g Piperazin, 61 g 1,8-Diaminonaphthalin und 55 g Tetraglykol vorgelegt, unter Kneten innerhalb von einer Stunde auf 200 °C erhitzt und 4 Stunden bei dieser Temperatur zur Reaktion gebracht.

Nach dem Abkühlen auf Raumtemperatur wird die Knetmasse in 2%-ige Pottasche-Lösung eingetragen und bei 70 °C zwei Stunden gerührt.

Die Suspension wird abfiltriert, nacheinander mit Wasser, 10%-iger Essigsäure und Wasser gewaschen. Nach dem Trocknen bei 80 °C erhält man schwarzes Perylenpigment in Form eines schwarzen Pulvers.

## Patentansprüche

1. Herstellung von Farbmitteln der allgemeinen Formel (la), (Ib) oder (Ic) 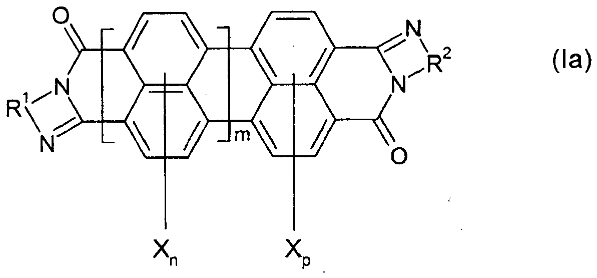 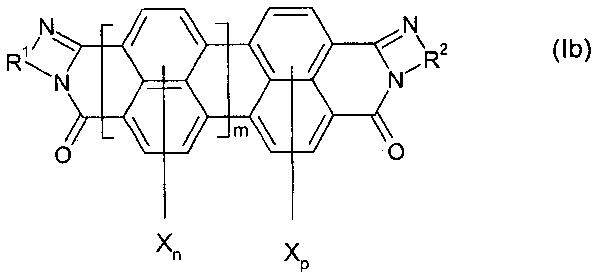 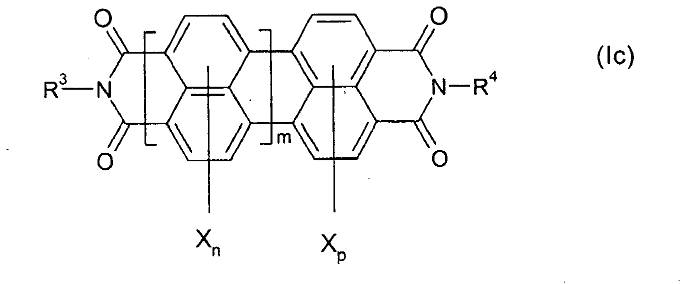 oder deren Gemischen, mit
R¹, R² unabhängig voneinander, gleich oder verschieden, Phenylen, Naphthylen, Pyridylen, 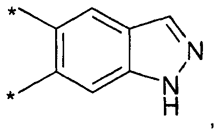 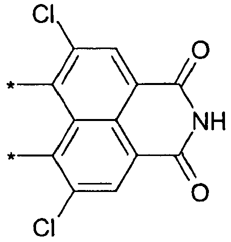 oder 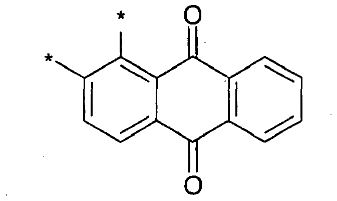 wobei R¹, R² jeweils ein- oder mehrfach durch C₁-C₂₂-Alkyl, C₃-C₂₂-Alkenyl, C₁-C₂₂-Alkoxy, Hydroxy, Nitro und/oder Halogen substituiert sein können,
R³, R⁴ unabhängig voneinander, gleich oder verschieden, Wasserstoff; C₁-C₂₂-Alkyl, Aryl, C₁-C₂₂-Aralkyl, 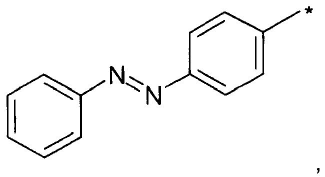 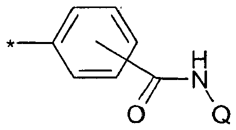 oder 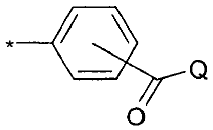 Q: C₁-C₂₀-Alkyl, Aryl wobei R³, R⁴ jeweils ein- oder mehrfach durch C₁-C₂₂-Alky, C₁-C₂₂-Alkoxy, Hydroxy, Nitro und/oder Halogen substituiert sein können,
X unabhängig voneinander, gleich oder verschieden, Halogen,
n, p unabhängig voneinander, 0, 1, 2, 3 oder 4,
m 0, 1, 2, 3 oder 4
wobei
(a) Tetracarbonsäuren oder funktionelle Derivate von Tetracarbonsäuren, die unter den Reaktionsbedingungen mit Aminen bzw. Diaminen zu Farbmitteln der Formeln Ia bis Ic reagieren können, mit
(b) mindestens einer Verbindung gewählt aus
i. aliphatischen Aminen,
ii. aromatischen Aminen,
iii. aliphatischen Diaminen,
iv. aromatischen Diaminen,
v. Ammoniak
umgesetzt werden,
(c) optional in Gegenwart weiterer Additive,
(d) in Gegenwart von Benetzungsmitteln
und wobei
die Umsetzung in einer Mischapparatur erfolgt und wobei in einem zusätzlichen Schritt das entstandene Rohpigment in derselben Apparatur weiterverarbeitet wird, wobei die Mischapparatur einem kneterartigen Reaktor, einem ein- oder
mehrteiligen/welligen Kneter, einem Extruder, einem Schaufeltrockner oder einer Mühle entspricht und wobei die Umsetzung in Gegenwart eines Benetzungsmittels oder eines Gemisches von Benetzungsmitteln erfolgt..

2. Verfahren nach einem der vorstehenden Ansprüche, wobei die Weiterverarbeitung durch Salzknetung erfolgt.

3. Verfahren nach einem der vorstehenden Ansprüche, wobei die Weiterverarbeitung in Gegenwart eines Additivs erfolgt.

4. Verfahren nach einem der vorstehenden Ansprüche, wobei R¹ und R² gleich sind und unsubstituiertem Phenylen oder Naphthylen entsprechen.

5. Verfahren nach einem der vorstehenden Ansprüche, wobei R³ und R⁴ gleich sind und Alkoxyphenyl, Methyl, Propyl, 2,4-Dimethylphenyl, Wasserstoff, oder 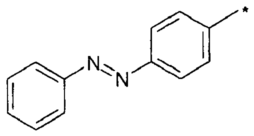 entsprechen.

6. Verwendung von gemäß den Ansprüchen 1 bis 5 hergestellten Farbmitteln zur Einfärbung von hochmolekularen organischen und anorganischen Materialien natürlicher und synthetischer Herkunft.

7. Verwendung von gemäß den Ansprüchen 1 bis 5 hergestellten Farbmitteln zur Einfärbung von Kunststoffen, Lacken oder Druckfarben.

## Claims

1. Preparation of colorants of the general formula (Ia), (Ib) or (Ic) 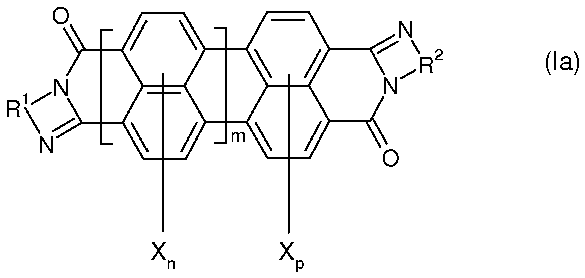 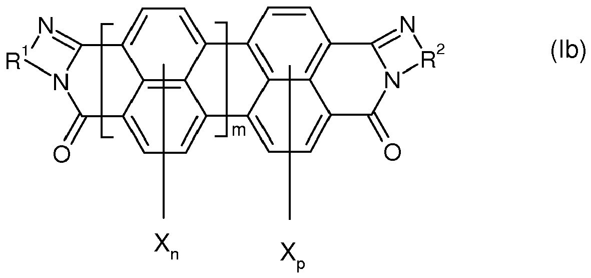 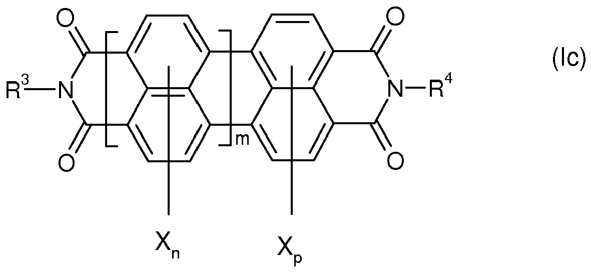 or mixtures thereof, where
R¹ and R² are the same or different and independently represent phenylene, naphthylene, pyridylene, 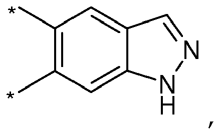 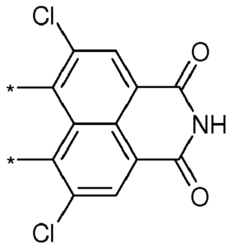 or 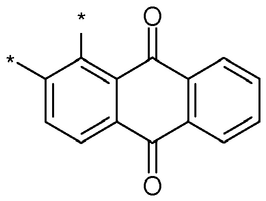 and R¹ and R² may each be substituted one or more times by C₁-C₂₂-alkyl, C₃-C₂₂-alkenyl, C₁-C₂₂-alkoxy, hydroxyl, nitro and/or halogen,
R³ and R⁴ are the same or different and independently represent hydrogen, C₁-C₂₂-alkyl, aryl, C₁-C₂₂-aralkyl, 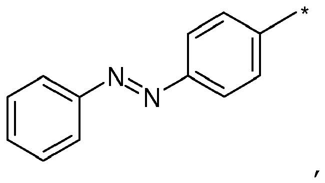 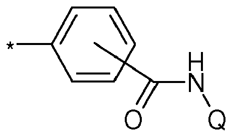 or 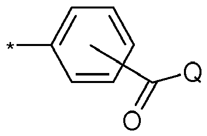 Q: C₁-C₂₀-alkyl, aryl
and R³ and R⁴ may each be substituted one or more times by C₁-C₂₂-alkyl, C₁-C₂₂-alkoxy, hydroxyl, nitro and/or halogen,
X in each occurrence is the same or different and independently represents halogen,
n and p are independently 0, 1, 2, 3 or 4,
m is 0, 1, 2, 3 or 4,
which comprises reacting
(a) tetracarboxylic acids or functional derivatives of tetracarboxylic acids which, under the reaction conditions, are capable of reacting with amines or diamines to form colorants of the formulae Ia to Ic with
(b) at least one compound selected from
i. aliphatic amines,
ii. aromatic amines,
iii. aliphatic diamines,
iv. aromatic diamines,
v. ammonia
(c) optionally in the presence of further additives,
(d) in the presence of wetting agents
wherein
the reaction is carried out in a mixing apparatus and comprising an additional step of further processing the resulting crude pigment in the same apparatus, wherein the mixing apparatus represents a kneaderlike reactor, a single- or multi-part/shaft kneader, an extruder, a paddle dryer or a mill and wherein the reacting is effected in the presence of a wetting agent or of a mixture of wetting agents.

2. The process according to the preceding claim wherein the further processing is effected by salt kneading.

3. The process according to any of the preceding claims wherein the further processing is effected in the presence of an additive.

4. The process according to any of the preceding claims wherein R¹ and R² are the same and each represent unsubstituted phenylene or naphthylene.

5. The process according to any of the preceding claims wherein R³ and R⁴ are the same and each represent alkoxyphenyl, methyl, propyl, 2,4-dimethylphenyl, hydrogen or

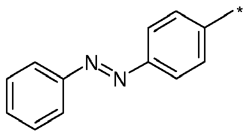

6. The use of colorants obtained according to claims 1 to 5 for coloration of macromolecular organic and inorganic materials of natural and synthetic origin.

7. The use of colorants obtained according to claims 1 to 5 for coloration of plastics, paints or printing inks.

## Revendications

1. Préparation de colorants des formules générales (Ia), (Ib) ou (Ic) 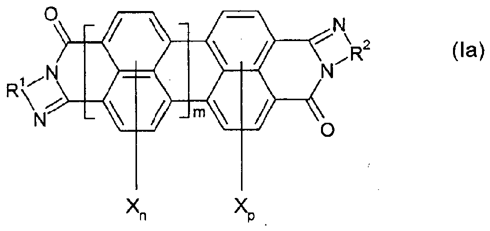 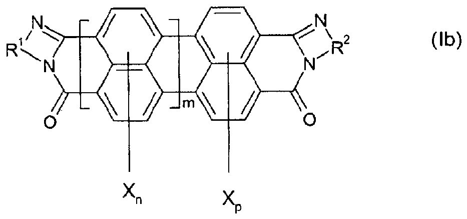 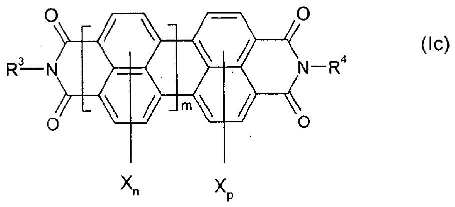 ou leurs mélanges, où
R¹, R² représentent, indépendamment l'un de l'autre, en étant identiques ou différents, phénylène, naphtylène, pyridylène, 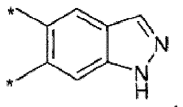 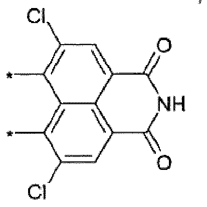 ou 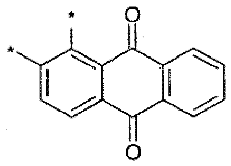 R¹, R² pouvant être à chaque fois monosubstitués ou polysubstitués par C₁-C₂₂-alkyle, C₃-C₂₂-alcényle, C₁-C₂₂-alcoxy, hydroxy, nitro et/ou halogène,
R³, R⁴ représentent, indépendamment l'un de l'autre, en étant identiques ou différents, hydrogène, C₁-C₂₂-alkyle, aryle, C₁-C₂₂-aralkyle, 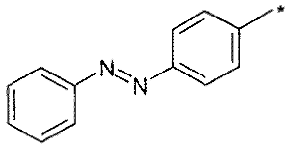 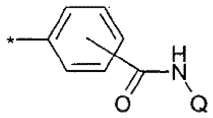 ou 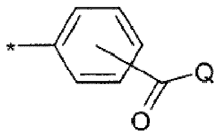 Q : C₁-C₂₀-alkyle, aryle
R³, R⁴ pouvant être à chaque fois monosubstitués ou polysubstitués par C₁-C₂₂-alkyle, C₁-C₂₂-alcoxy, hydroxy, nitro et/ou halogène,
X représentent, indépendamment l'un de l'autre, en étant identiques ou différents, halogène,
n, p valent, indépendamment l'un de l'autre, 0, 1, 2, 3 ou 4,
m vaut 0, 1, 2, 3 ou 4
en transformant
(a) des acides tétracarboxyliques ou des dérivés fonctionnels d'acides tétracarboxyliques, qui peuvent réagir dans les conditions de réaction avec des amines ou des diamines en colorants des formules Ia à Ic, avec
(b) au moins un composé, choisi parmi
i. les amines aliphatiques,
ii. les amines aromatiques,
iii. les diamines aliphatiques,
iv. les diamines aromatiques,
v. l'ammoniac
(c) éventuellement en présence d'autres additifs,
(d) en présence d'agents mouillants
et la transformation ayant lieu dans un appareil de mélange et le pigment brut formé étant transformé davantage dans le même appareil dans une étape supplémentaire, l'appareil de mélange correspondant à un réacteur de type malaxeur, à un malaxeur à un(e) ou plusieurs pièces/arbres, à une extrudeuse, à un sécheur à pales ou à un broyeur et la transformation ayant lieu en présence d'un agent mouillant ou d'un mélange d'agents mouillants.

2. Procédé selon la revendication précédente, la transformation ultérieure ayant lieu par malaxage avec un sel.

3. Procédé selon l'une quelconque des revendications précédentes, la transformation ultérieure ayant lieu en présence d'un additif.

4. Procédé selon l'une quelconque des revendications précédentes, R¹ et R² étant identiques et correspondant à phénylène ou naphtylène non substitué.

5. Procédé selon l'une quelconque des revendications précédentes, R³ et R⁴ étant identiques et correspondant à alcoxyphényle, méthyle, propyle, 2,4-diméthylphényle, hydrogène ou

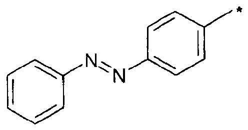

6. Utilisation de colorants préparés selon les revendications 1 à 5 pour teinter des matériaux organiques et inorganiques de haut poids moléculaire, d'origine naturelle et synthétique.

7. Utilisation de colorants préparés selon les selon les revendications 1 à 5 pour la teinture de matériaux synthétiques, de laques ou d'encres d'imprimerie.
